# EUROPEAN PATENT APPLICATION

(11) **EP 1 998 306 A1**
(43) Date of publication of application: **03.12.2008**
(21) Application number: 07024718.4
(22) Date of filing: 20.12.2007
(51) Int. Cl.: G09C 5/00, H04N 1/44, H04L 9/00

(54) **Image encryption/decryption system**

(30) Priority: 30.05.2007 US 755278
(71) Applicant: Fujitsu Ltd., Kawasaki-shi, Kanagawa 211-8588 (JP)
(72) Inventor: Kuraki, Kensuke, Kawasaki-shi Kanagawa 211-8588 (JP); Fukui, Hiroji, Kawasaki-shi Kanagawa 211-8588 (JP); Aman, Taizo, Kawasaki-shi Kanagawa 211-8588 (JP); Nakagata, Shohei, Kawasaki-shi Kanagawa 211-8588 (JP)
(74) Representative: HOFFMANN EITLE

(57) **Abstract**

When decrypting an image of a part of a document that is encrypted and therefore illegible, a user uses a decryption apparatus (15) to read the document as an electronic image and also to receive a user authentication by accessing a key management server (11). Then, the user transmits a management number obtained from the image to the key management server (11) from the decryption apparatus (15). The key management server (11) extracts position information of the portion of the document that is encrypted and a decryption key for decrypting this portion from a key management database (13) and transmits the decryption key to the decryption apparatus (15). The decryption apparatus (15) processes the electronic image by using the position information and decryption key received from the key management server (11) so as to decrypt the encrypted part so that it is legible.

## Description

### Background of the Invention

### Field of the Invention

The present invention relates to an image encryption/decryption system for preventing the leakage of information to a third party by visually encrypting a portion of important information such as personal information for a digital image and an image printed on printed matter.

### Description of the Related Art

Amid the progress of the information age, leakage of secret information has become a serious problem and hence the development of techniques to prevent information leakage is needed. For digital data, for example, techniques have been developed for encrypting data so that the content will not be visible if information is taken by a third party; some of these techniques are already utilized as useful means for preventing information leakage.

Meanwhile, techniques for preventing the leakage of information from printed matter printed on paper and such have not been sufficiently developed, nor is there an example of a commercial product. Half of all information leakage is said to be related to printed matter, and therefore the development of a technique to prevent information leakage, as was done for digital data, is urgently required.

Examples in which countermeasures to information leakage from printed matter are required include bills issued at the time merchandise is purchased, credit card account statements, patient cards at hospitals, school report cards, and lists of names. An image encryption technique put forth in reference patent document 1 enables the prevention of information leakage by encrypting images printed on paper (N.B.: because account statements, hospital patient's cards and such can be defined as a sort of visual image, these are generically called "image" in the present specification), in addition to digital images.

The present invention is based on the technique put forth in the related application (i.e., PCT / JP2007 / 000215, filed on March 13, 2007). First a description of the patent document 1 will be given to make it easy to understand.

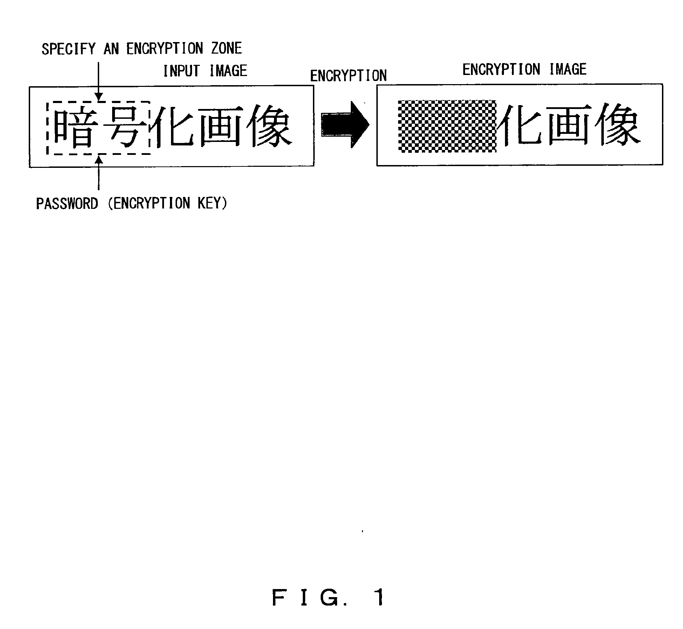

Fig. 1 is a diagram describing an image encryption technique.

One technique of image encryption is to apply image processing to a specified zone (noted as "encryption zone" hereinafter) of an input image based on, for example, a password for making the original content unrecognizable (refer to Fig. 1). The image encryption technique makes it possible to encrypt a plurality of partial zones within a portion of an image, and also enables encryption with different keys for individual partial zones. The utilization of this characteristic is conceivably applicable to an authority management for each partial zone. As an example, there may be a need to encrypt three partial zones within an image (for example, in an internal use document of a business enterprise) in which a conceivable situation of usage of encryption is one in which key A is used for partial zone 1 for the project leader's eyes only because it contains important information, key B is used for partial zone 2 and is for the project members' eyes only, and key C is used for partial zone 3 for internal company use only. For a person decrypting the image, however, it is impossible to find out what partial zone is encrypted with which key, and it is not impractical in terms of security and/or convenience for a person who has encrypted it to provide a person who is going to decrypt it with the key(s).

### Summary of the Invention

The object of the present invention is to provide an encryption/decryption system that makes it possible to securely and conveniently provide, in an image encryption technique, a decrypting party with information related to the decryption.

An encryption/decryption system according to the present invention, being one for encrypting an electronic document image, is characterized as enabling encryption by comprising: a user authentication unit for authenticating a user encrypting the image; an encryption zone obtainment unit for obtaining position information of a partial zone of an image to be encrypted that is specified by a user; a management number vesting unit for vesting with a management number to identify the image; an encryption key generation unit for generating an encryption key for encrypting an image; a decryption key generation unit for generating a decryption key corresponding to the encryption key; a decryption key storage unit for storing the management number, the position information of the partial zone and the decryption key by correlating them; and an encryption key transmission unit for transmitting the encryption key and management number to a user.

It is also characterized as enabling an encryption by further comprising, in addition to the comprisal described above, a management number obtainment unit for obtaining, from a user, a management number for an image to be decrypted; a position information obtainment unit for obtaining the position information of the partial zone by using the management number as a key; a decryption key obtainment unit for obtaining a decryption key for the partial zone by using the management number as a key; and a decryption key transmission unit for transmitting the decryption key to the user.

### Brief Description of the Drawings

Fig. 1 is a diagram describing an image encryption technique;
Fig. 2 is a diagram describing a first preferred embodiment (part 1);
Fig. 3 is a diagram describing a first preferred embodiment (part 2);
Fig. 4 is a diagram exemplifying a user database;
Fig. 5 is a diagram exemplifying a key management database for use in the first embodiment;
Fig. 6 is a diagram describing a second preferred embodiment according to the present invention;
Fig. 7 is a diagram describing a second preferred embodiment according to the present invention;
Fig. 8 is a diagram exemplifying a key management database for use in the second embodiment (part 1);
Fig. 9 is a diagram exemplifying a key management database for use in the second embodiment (part 2);
Fig. 10 is a diagram exemplifying a user group database for use in the second embodiment;
Fig. 11 is a diagram exemplifying another key management database for use in the second embodiment;
Fig. 12 is a diagram of an image encryption system utilizing a document format database;
Fig. 13 is a diagram exemplifying a table of the document format database used for the embodiment shown in Fig. 12 (part 1) ;
Fig. 14 is a diagram exemplifying a table of the document format database used for the embodiment shown in Fig. 12 (part 2);
Fig. 15 is a diagram exemplifying another image encryption system utilizing a document format database;

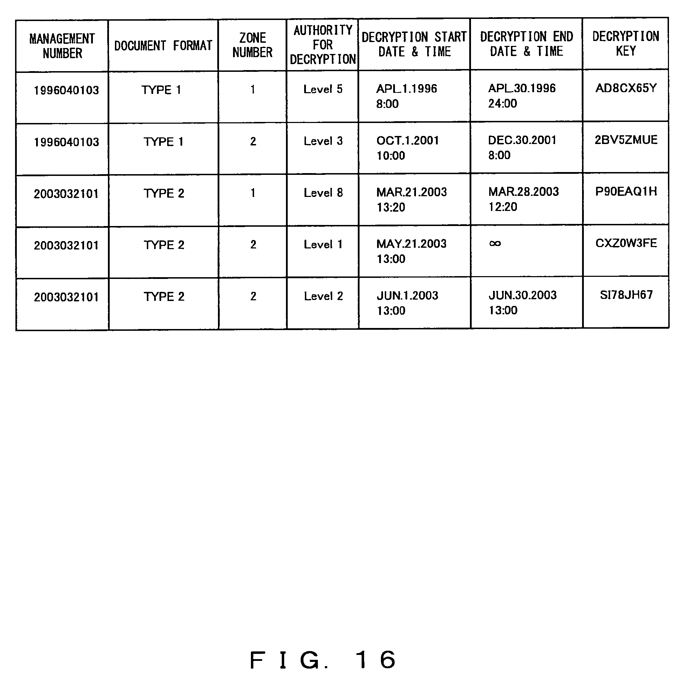

Fig. 16 is a diagram exemplifying another key management database for use in the embodiment shown in Fig. 15;
Fig. 17 is a diagram exemplifying yet another image encryption system utilizing a document format database;
Fig. 18 is a diagram exemplifying another key management database used for the embodiment shown in Fig. 17;
Fig. 19 is a diagram exemplifying a decryption system for limiting the number of times decryption can be performed; and
Fig. 20 is a diagram exemplifying a table of a key management database used for the embodiment shown in Fig. 19.

### Description of the Preferred Embodiments

The present invention is contrived to build up a system comprising a key management server for managing an encryption key, thereby enabling decryption to be performed securely without losing convenience even if a plurality of partial zones are encrypted with different encryption keys.

The specific solution means is described in the following.

A system according to the present invention comprises an encryption apparatus for encrypting an image, a decryption apparatus for decrypting the encrypted image and a key management server for managing a key. The encryption apparatus and decryption apparatus referred to in this specification may be implemented by incorporating the function of the present invention in equipment other than a personal computer (PC) such as a copier (including a hybrid copier), facsimile, printer, scanner, overhead reader, portable phone, personal digital assistant (PDA), digital camera, or television. The system according to the preferred embodiments is configured to include the encryption apparatus, decryption apparatus and server independently; an integrated apparatus comprising similar functions may be appropriate, however.

### [Encryption]

Next is a description of the procedure of encrypting in the encryption apparatus. The encryption apparatus selects a zone that is desired to be encrypted of digital data created by an application or an image read by an optical device such as a digital camera or scanner. After the selection of a zone, the encryption apparatus sends an inquiry to the key management server for user authentication. The key management server performs an authentication by using a user database or the like and gives permission for an encryption if the user is a legitimate user. Then, the encryption apparatus obtains a management number for identifying the encrypted image from the key management server, and sends the position information of the selected partial zone and the information necessary for decryption to the key management server (i.e., by reading the entirety of the image by using a scanner and obtaining the position information of a spot where the selected zone is positioned in the entirety of the image). The information necessary for the decryption referred to herein is such information as information about the authority of users that are permitted to perform decryption and time information such as the time period, date and such for permitting decryption to be performed only within a specified time period. The key management server generates, and sends to the encryption apparatus, an encryption key for encrypting the partial zone, and stores the information received from the encryption apparatus, the management number and encryption key in a key management database. The encryption key used for the encryption may be the same as the decryption key that is taken out of the aforementioned database when decrypting. If the encryption key and decryption key are different, a decryption key is created and stored at this point in time. The encryption apparatus encrypts the selected partial zone by using the encryption key received from the key management server. When encrypting a plurality of partial zones, the process between sending the position information and encrypting described above is repeated.

### [Decryption]

Next is a description of the procedure of decrypting in the decryption apparatus. The decryption apparatus reads digital data if an image is stored as digital data, or reads an image digitized by an optical device such as a digital camera or scanner if an image is a hard copy printed on paper or such or an image displayed in a display device. The decryption apparatus sends an inquiry to the key management server and authenticates a user. The key management server authenticates the user via a user database or the like, and requests the decryption apparatus for the management number assigned at the time of encryption if the user is a legitimate user. The decryption apparatus transmits the management number to the decryption apparatus. The key management server searches the position information of the encrypted partial zone for the information required for decryption and searches for the decryption key from the key management database on the basis of the management server. It also analyzes the information required for decryption and transmits the decryption key to the decryption apparatus if there is no problem with the authority and such of the user trying to decrypt it. If there is a problem with the authority of the user or other such problem with the user, the key management server sends no decryption key. Upon receiving the decryption key, the decryption apparatus decrypts the data using the decryption key.

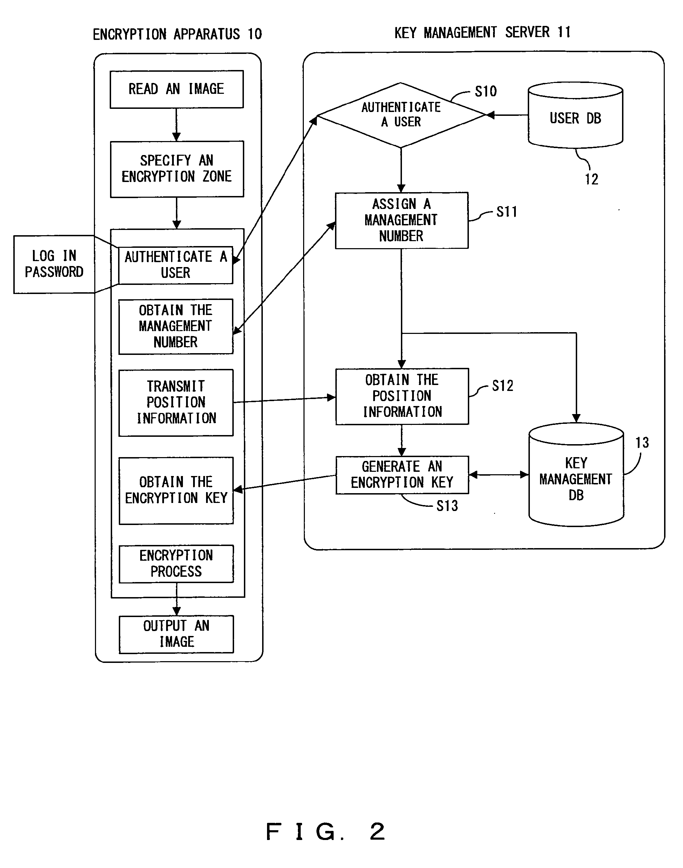

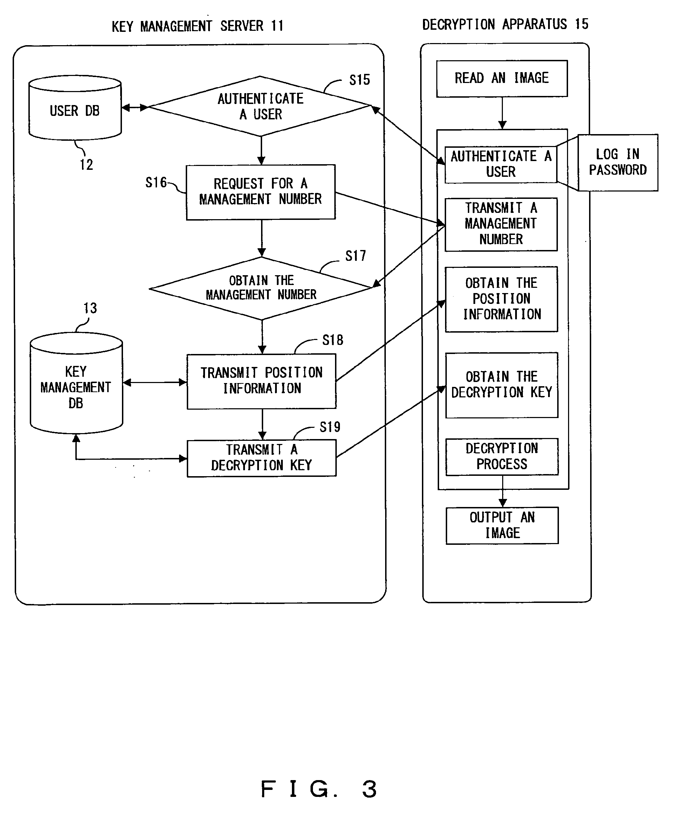

Figs. 2 and 3 are diagrams describing a first preferred embodiment.

A system according to the first embodiment comprises an encryption apparatus encrypting an image, a decryption apparatus decrypting an encrypted image, and a key management server managing a key.

Next, the procedure of encrypting at the encryption apparatus 10 is described by referring to Fig. 2. In the encryption apparatus 10, a zone in an image that is desired to be encrypted by reading the image with a scanner or the like is selected by a pointer or the like. In the case of a document image of a predetermined format or the like, the coordinates or the like of a zone desired to be encrypted can be pre-registered in the encryption apparatus 10.

After selecting a zone, the encryption apparatus 10 sends an inquiry to the key management server 11 and authenticates a user (S10) . The key management server 11 authenticates a user by utilizing the user database (DB) 12 or the like and gives permission for an encryption if the user is a legitimate user. The user authentication utilizes, for example, a user ID, password, IC card and biometrics. Incidentally, the communication between the key management server 11 and encryption apparatus 10 may utilize a cryptographic communication such as a Secure Sockets Layer (SSL).

The key management server 11 generates a management number for uniquely indicating the image to be encrypted (S11). The encryption apparatus 10 obtains the management number for identifying the encrypted image from the key management server 11 and transmits the position information of the selected partial zone to the key management server 11. If the object of encryption is a paper medium, the position information is first imported in its entirety by using a scanner or the like as an image, and the position of the selected partial zone is then obtained as coordinates of the entire image. If the object of encryption is electronic data, an image is displayed in word processor software or the like, and the coordinate information in the word processor screen is used.

Having received the position information of the partial zone from the encryption apparatus 10 (S12), the key management server 11 generates an encryption key for encrypting the partial zone by utilizing random numbers (S13) and transmits the encryption key to the encryption apparatus 10.

The preferred embodiment of the present invention is assumed to use symmetric key cryptography, i.e., described simply, to use the same encryption and decryption keys; the present system, however, may use different keys for encryption and decryption by combining a public key cryptographic system. The management number and decryption key (or a duplicate of the encryption key in the case of symmetric key cryptography) and the position information received from the encryption apparatus are registered in the key management database (DB) 13. A decryption key is obtained from the aforementioned database when decrypting.

Having received the encryption key from the key management server 11, the encryption apparatus 10 encrypts the partial zone using the encryption key. If a plurality of partial zones are to be encrypted, the processes between the transmission of position information to the key management server 11 and the encryption using an encryption key as described above are to be repeated for the number of specified partial zones. Alternatively, the position information of a plurality of partial zones may be put together as a list and transmitted to the key management server 11 so that a plurality of encryption keys are received at once.

The management number obtained on the encryption apparatus side is memorized by the user who has encrypted it, or added to the image after completing the encryption. Methods for adding the management number to an image include directly drawing the number in a part of the image or adding it to the image in a machine readable form such as a barcode, a two-dimensional barcode, an electronic watermark, or via steganography. The encryption key received at the encryption apparatus 10 may be erased after completing the encryption.

Next is a description of the procedure of decryption at the decryption apparatus by referring to Fig. 3. The decryption apparatus 15 reads an encrypted image and authenticates a user by inquiring with the key management server 11 (S15). The key management server 11 authenticates the user by utilizing the user database (DB) 12 and makes a request to the decryption apparatus 15 for the management number assigned at the encryption if the user is a legitimate user (S16).

The decryption apparatus 15 transmits the management number to the key management server 11. If the management number is added to the image as a barcode, electronic watermark or steganography, it is read from the image (S17).

The key management server 11 obtains the position information and decryption key of the encrypted partial zone from the key management database (DB) 13 on the basis of the management number and transmits them to the decryption apparatus 15 (S18 and S19).

The decryption apparatus 15 decrypts the encrypted partial zone by using the received decryption key and position information. If an image is printed on paper after encryption and the image of the paper is read by a scanner and then the image is decrypted, there will probably be a shift in the position and/or size between the position information of the partial zone received from the key management server 11 and that of the actual partial zone; therefore, the range of the partial zone to be decrypted is set to be a little larger.

The encryption and decryption by employing the above described system makes it possible to perform decryption without a user being conscious of the difference in keys even if a single image has plural encrypted zones that have been encrypted with different keys.

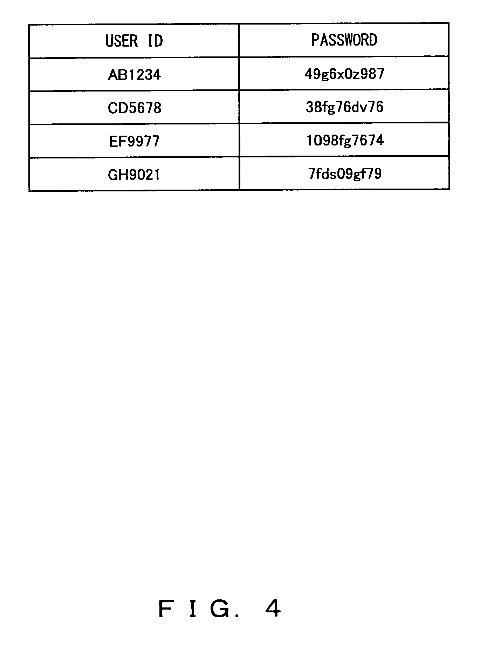

Fig. 4 is a diagram exemplifying a user database. The user database stores a user ID and a password by correlating them with each other to authenticate a user as shown in Fig. 4. When a user logs in, the user ID and password are transmitted to the key management server 11 which then authenticates the user by confirming whether the sent-over user ID and password are ones stored in the user database 12 and whether the user ID and password correctly correspond to each other.

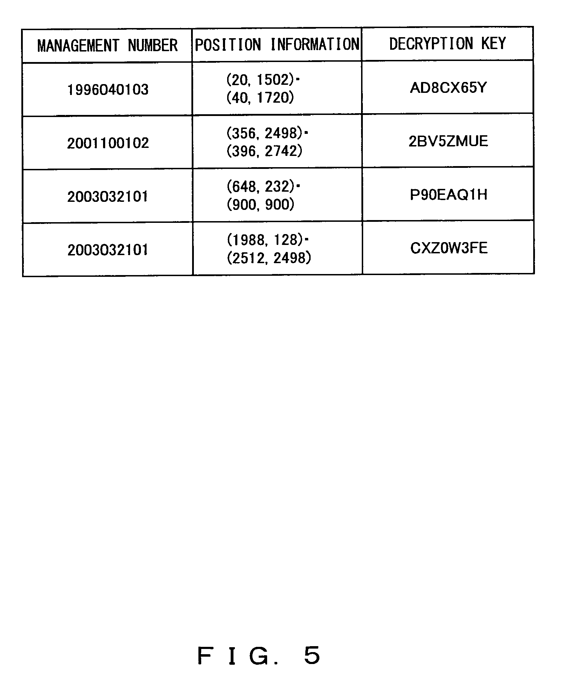

Fig. 5 is a diagram exemplifying a key management database for use in the first embodiment.

In the key management database, the management number and position information are the main keys; when the decryption apparatus sends an inquiry by the management number, they are referred to for transmitting the position information and a decryption key corresponding to the management number to the decryption apparatus as shown in Fig. 5. A single management number expresses a single document, and the position information corresponding thereto stores the position information of all the encrypted parts included in the document. Further, decryption keys for decrypting the encrypted parts existing in these positions are stored together with, and correlated with, the management numbers and position information.

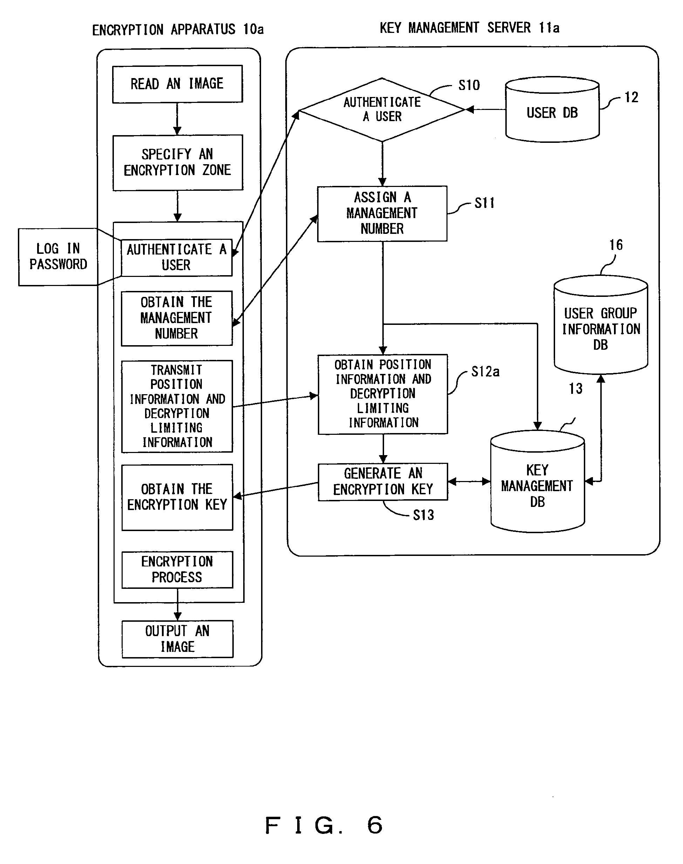

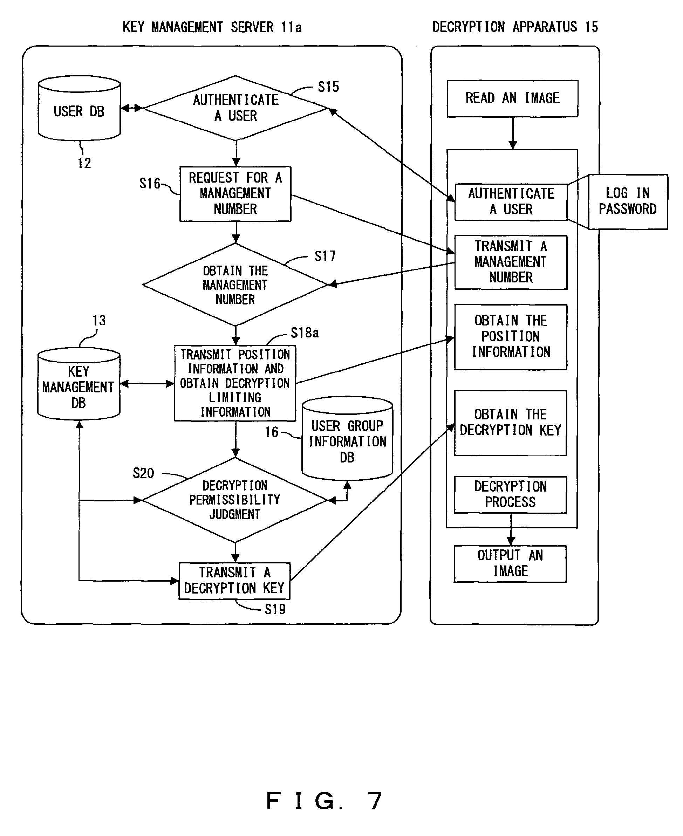

Figs. 6 and 7 are diagrams describing a second preferred embodiment according to the present invention.

A system according to the second embodiment comprises an encryption apparatus 10a for encrypting an image, a decryption apparatus 15 for decrypting an encrypted image, and a key management server 11a for managing a key.

Next a description is given for the procedure of encrypting at the encryption apparatus 10a. In the encryption apparatus 10a, a zone in an image that is desired to be encrypted is selected by using a pointer or the like. Alternatively, in the case of a document image for which the format is determined, coordinates or the like of a zone desired to be encrypted are pre-registered in the encryption apparatus 10a or key management server 11a, and then they are obtained when the zone is encrypted, or obtained from an external storage apparatus or the like by way of a network.

After selecting a zone, the encryption apparatus 10a authenticates a user by sending an inquiry to the key management server 11a (S10). The key management server 11a authenticates the user by utilizing the user database (DB) 12 or the like, and gives permission to encrypt if the user is a legitimate user. The user authentication utilizes information such as a user ID, password, IC card or biometrics. Meanwhile, the communication between the key management server 11a and encryption apparatus 10a may utilize a cryptographic communication such as SSL.

The encryption apparatus 10a obtains the management number for identifying an encrypted image from the key management server 11a (S11) and sends the position information and decryption limiting information of the selected partial zone to the key management server 11a (S12a). The decryption limiting information referred to here is the information of the authority of a user who is permitted to decrypt, the information of time such as the decryption permissible period for permitting decryption only for a discretionary period, and the like.

The information of the authority of a user means the information such as "only a specific user is given permission to decrypt" and "only users belonging to a specific group are given permission to decrypt"; the information of a group a user belongs to is managed by the group database (DB) 16. For a decrypting user, a decryption performed by changing over users or groups that have been given permission to decrypt for each partial zone enables only a user(s) belonging to group A to decrypt the most important part of the document, only users belonging to group A and group B to decrypt the second important part, and users belonging to group A, group B and group C to decrypt the third important part, when, for example, creating an internal company document.

After receiving the position information and decryption limiting information of a partial zone from the encryption apparatus 10a, the key management server 11a generates an encryption key for encrypting the partial zone by using random numbers or the like (S13) and transmits the key to the encryption apparatus 10a, then registers the management number, decryption key (which is a duplicate of the encryption key when symmetric key cryptography is used) and the information received from the encryption apparatus 10a in the key management database (DB) 13. A decryption key is obtained from the database when decrypting.

Having obtained the encryption key from the key management server 11a, the encryption apparatus 10a encrypts the partial zone by using the encryption key. When encrypting a plurality of partial zones, the processes between a transmission of position information to the key management server 11a and the performance of encryption using an encryption key are repeated for the number of specified partial zones. Alternatively, pieces of the position information of the plurality of partial zones may be transmitted to the key management server 11a by putting them together as a list so that a plurality of encryption keys are received at once.

The management number obtained on the encryption apparatus side is memorized by the encrypting user or added to an image after the completion of encryption. Methods for adding the management number to an image include drawing a number directly in a portion of the image and adding the number to the image in a machine readable form such as a barcode, two-dimensional barcode, electronic watermark or steganography. The encryption key received at the encryption apparatus 10a may be erased after the completion of encryption.

Next is a description of the procedure of decrypting in the decryption apparatus by referring to Fig. 7. The decryption apparatus 15 reads the encrypted image and authenticates a user by sending an inquiry to the key management server 11a (S15). The key management server 11a authenticates the user by utilizing the user database (DB) 12 or the like and makes a request to the decryption apparatus 15 for the management number assigned at the encryption if the user is a legitimate user (S16).

The decryption apparatus 15 transmits the management number to the key management server 11a (S17). If the management number has been added to the image as a barcode or electronic watermark, the number is read from the image.

The key management server 11a obtains the position information, decryption limiting information and decryption key of the encrypted partial zone from the key management database (DB) 13 on the basis of the management number (S18a) . It refers to the decryption limiting information and the information of the user, who is trying to decrypt the encrypted data, within the group information database (DB) 16 and transmits the decryption key and the position information of the partial zone to the decryption apparatus 15 if the user has the authority to perform decryption and if the date and time of the decryption is a date and time at which decryption is permitted (S20 and S19).

The decryption apparatus 15 decrypts the encrypted partial zone by using the received decryption key and position information. In the case of decrypting an image printed on paper after an encryption followed by the paper being read using a scanner or a like case, however, the range of the partial zone to be decrypted is set to be a little larger because there is a high possibility that a shift in the position and size between the partial zone received from the key management server 11a and the actual partial zone will occur.

Encryption and decryption performed by employing the above described system makes it possible to perform decryption without a user being conscious of the differences in keys even if a single image has plural encrypted zones that have been encrypted with different keys, and the application of this characteristic also enables the user to limit the performance of decryption on the basis of the authority and/or time.

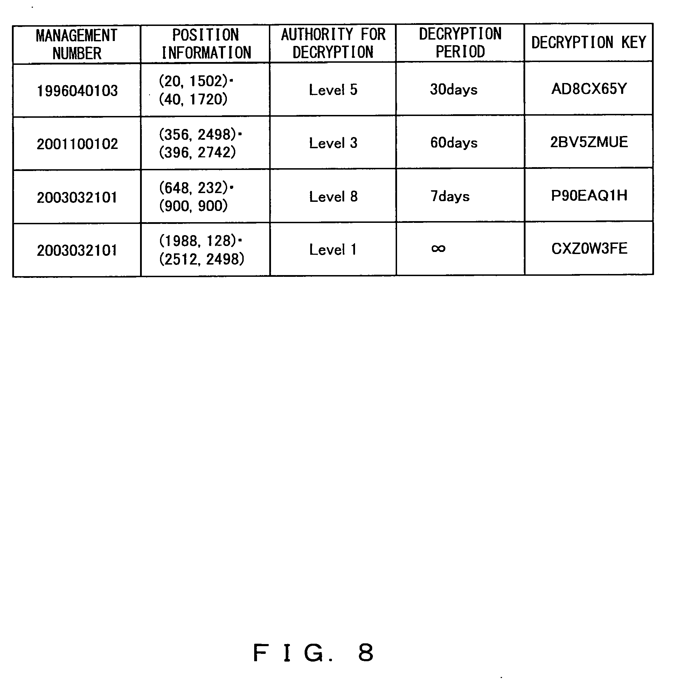

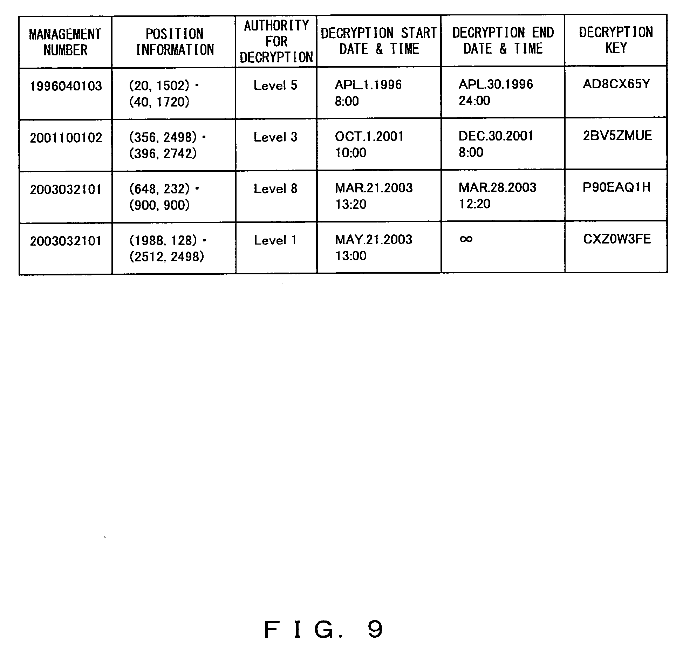

Figs. 8 and 9 are diagrams exemplifying a key management database for use in the second embodiment.

In the database shown in Fig. 8, the management number and position information are the main keys for obtaining a decryption key. The transmission of a decryption key is controlled by the limits of authority for decryption and decryption period. As for the period, a discretionary date and time may conceivably be specified. As an example, it is possible to register in the key management server on April 1 and set the decryption end date for May 31. In this case, decryption is enabled for the period between the registration in the key management server on April 1 and the end date of May 31, whereas decryption is prohibited on June 1 and thereafter. It is also possible to set a decryption start date. As an example, if a registration in the key management server is set on April 1 and if a decryption start date and end date are set for May 1 and May 31, respectively, then decryption is not permitted between April 1 and April 30, decryption is permitted between May 1 and May 31, and decryption is not permitted on June 1 and thereafter. Fig. 9 exemplifies a database utilizing a decryption start date and time and a decryption end date and time.

In the example of Fig. 8, a management number is stored by correlating it with the relevant position information, authority for decryption, decryption period and decryption key. Authority for decryption indicates that a group of users are categorized as a level and specifies which level is being permitted for decryption. Decryption period shows the number of dates since the document indicated by the management number was issued. A document from among the listed documents permitted for decryption indefinitely is indicated by "∞".

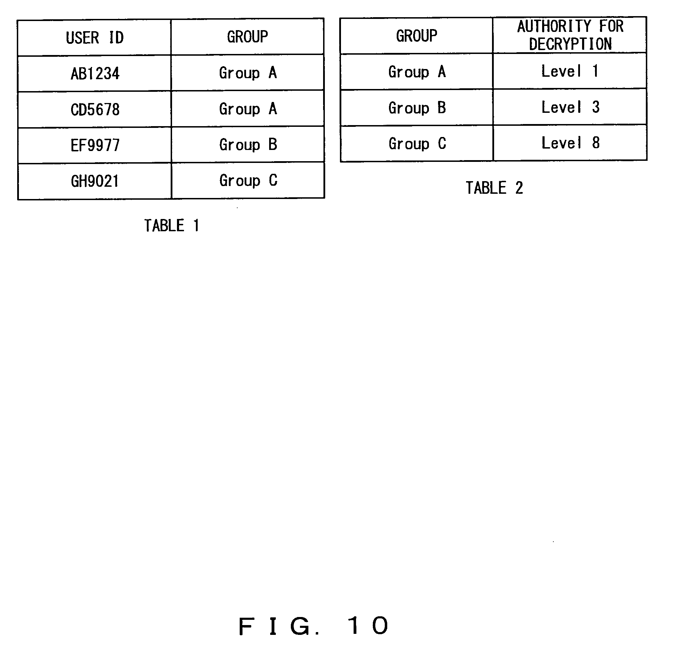

Fig. 10 is a diagram exemplifying a user group database for use in the second embodiment.

The user group database is constituted by two tables, with table 1 registering which user group a user identified by the user ID belongs to and table 2 registering which level of authority for decryption a user group is entitled to. The example shown by Fig. 9 shows that the users (i.e., AB1234 and CD5678) belonging to group A are permitted to decrypt only the encryption zone of level 1, the user (i.e., EF9977) belonging to group B is permitted to decrypt the encryption zones of levels 1 through 3 and the user (i.e., GH9021) belonging to group C is permitted to decrypt the encryption zones of levels 1 through 8.

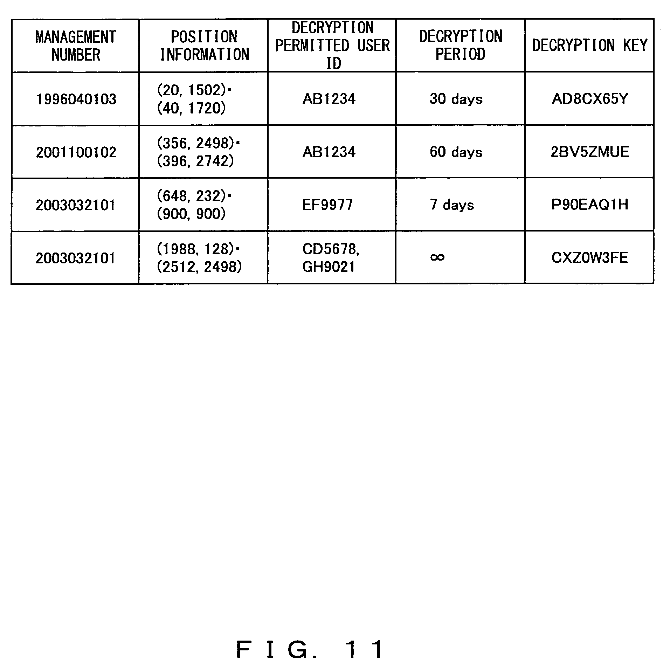

Fig. 11 is a diagram exemplifying another key management database for use in the second embodiment.

The table shown in Fig. 11 stores the decryption permitted user ID in place of the "authority for decryption" of the table shown in Fig. 8. This configuration makes it possible to know, just by referring to the key management database and without specifically providing a user group database, whether or not a user in question by an inquiry has an authority to decrypt a document identified by a certain management number.

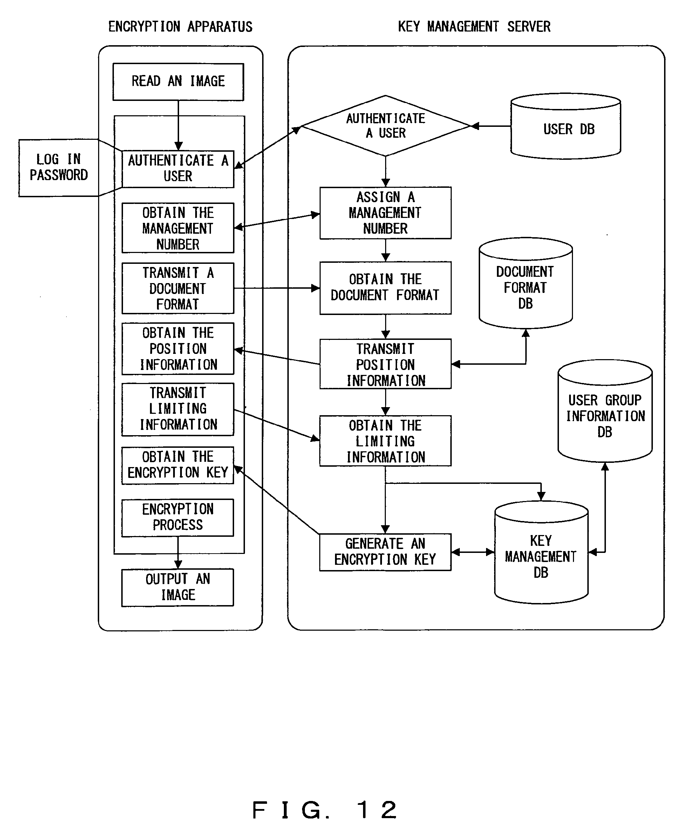

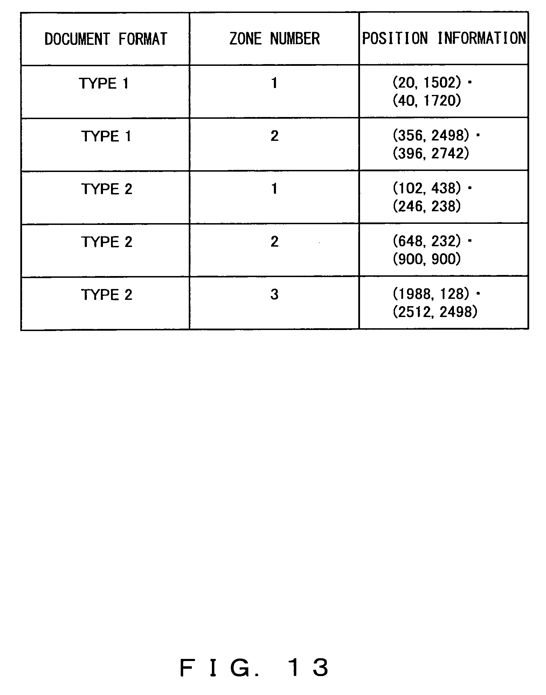

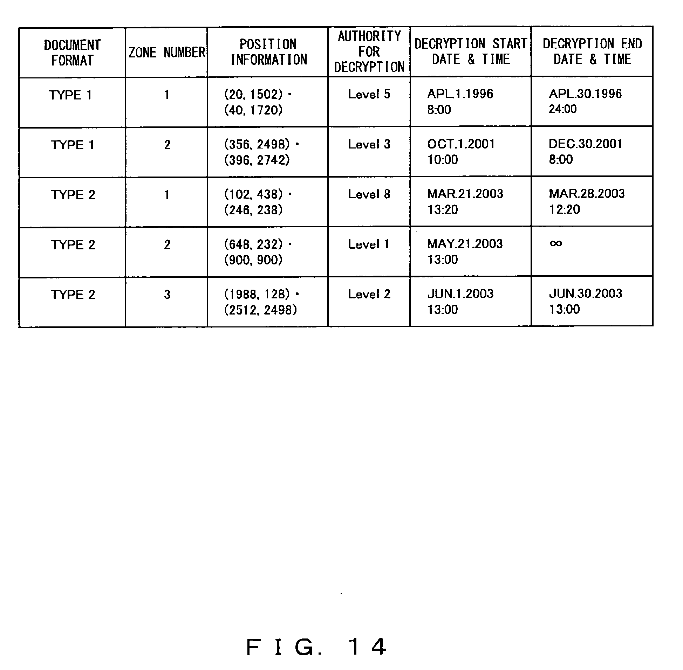

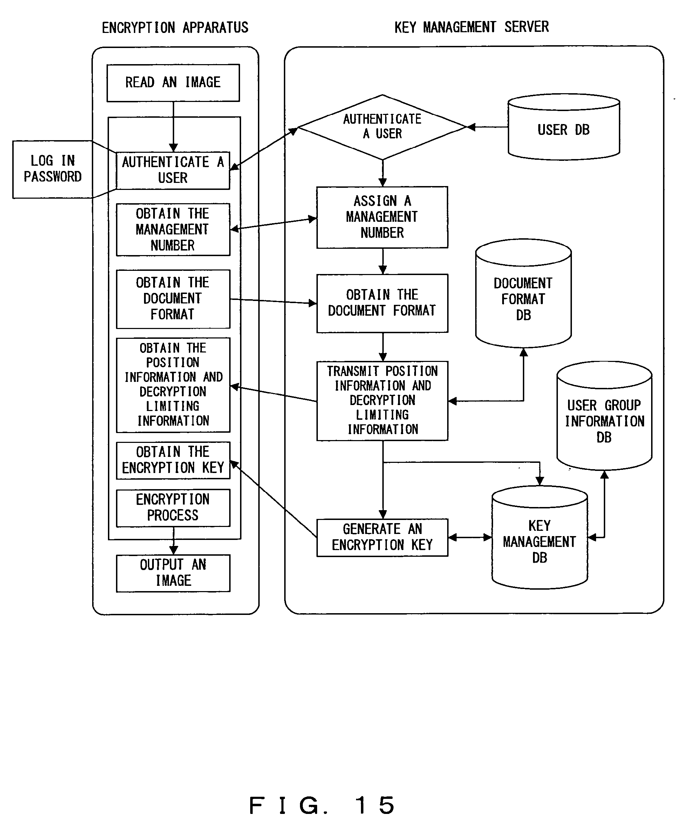

Fig. 12 exemplifies a case of utilizing a document format database (shown in Fig. 13) when encrypting and decrypting a document image of a fixed format. When specifying a zone for encryption at the encryption apparatus, the same coordinates are supposed to be specified with a pointer or the like for each time a document such as a document of a fixed format is encrypted or decrypted. In order to save such work, the position information of a zone to be encrypted for each format is managed in the document format database (DB) in advance, and an inquiry is sent to the key management server by the user specifying the format when encrypting so that the key management server obtains the coordinates of the zones to be encrypted from the document format database and transmits the coordinates to the encryption apparatus. In the example shown in Fig. 12, the key management server refers to the document format database; the database, however, may alternatively reside in the encryption apparatus, decryption apparatus, or in a storage area of a device, other than the key management server, connected to the network. The document format database registers the number of encryption zones and the related position information for each document format in the table shown in Fig. 13. Further, the setting up of the decryption limiting information in addition to the document format and the position information of an encryption zone as shown in Fig. 14 eliminates the necessity of inputting the limiting information every time an encryption is performed, as is done in the case of Fig. 15, thereby enabling batch processing when encrypting/decrypting a large amount of information.

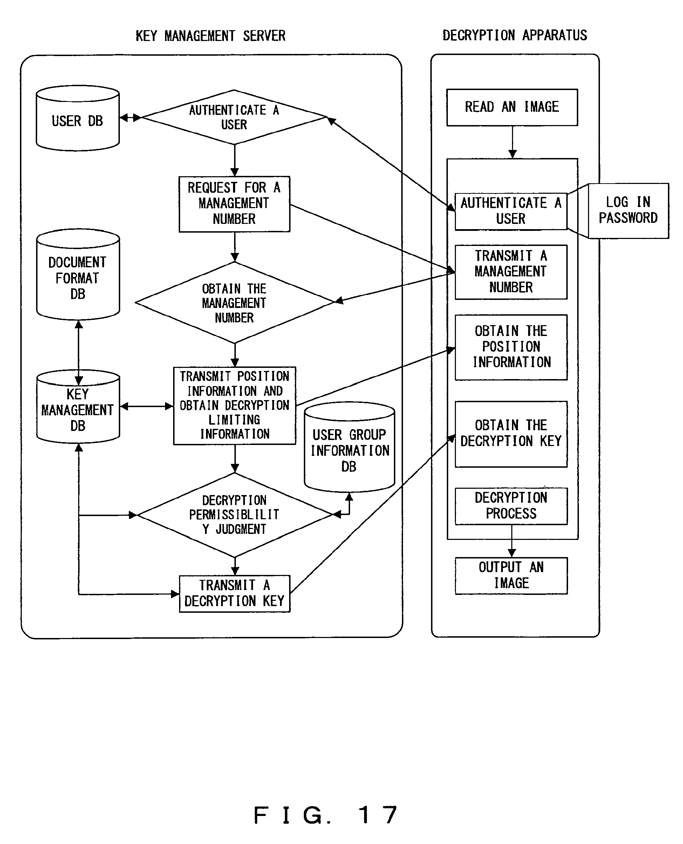

When using the document format database, the key management database (DB) may use the table shown in Fig. 17. When a user decrypts an image, a server may obtain the position information and decryption limiting information from the document format database and transmit them to the decryption apparatus as shown in Fig. 17.

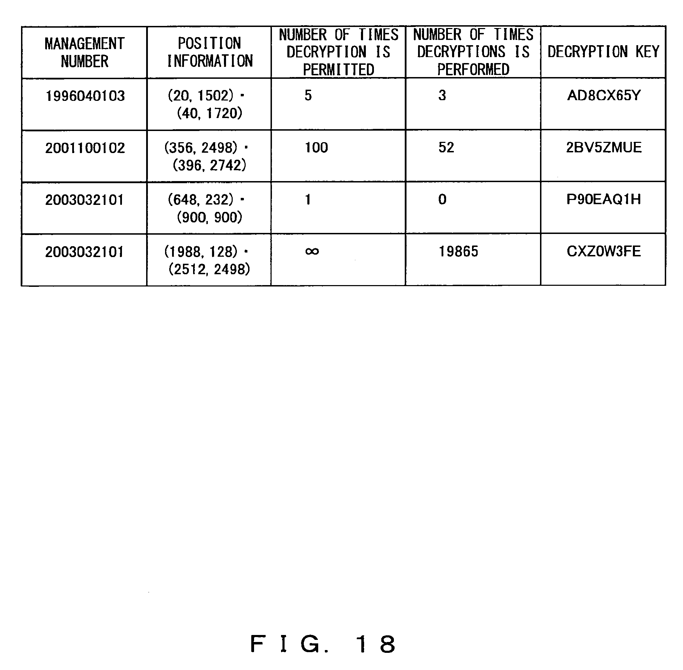

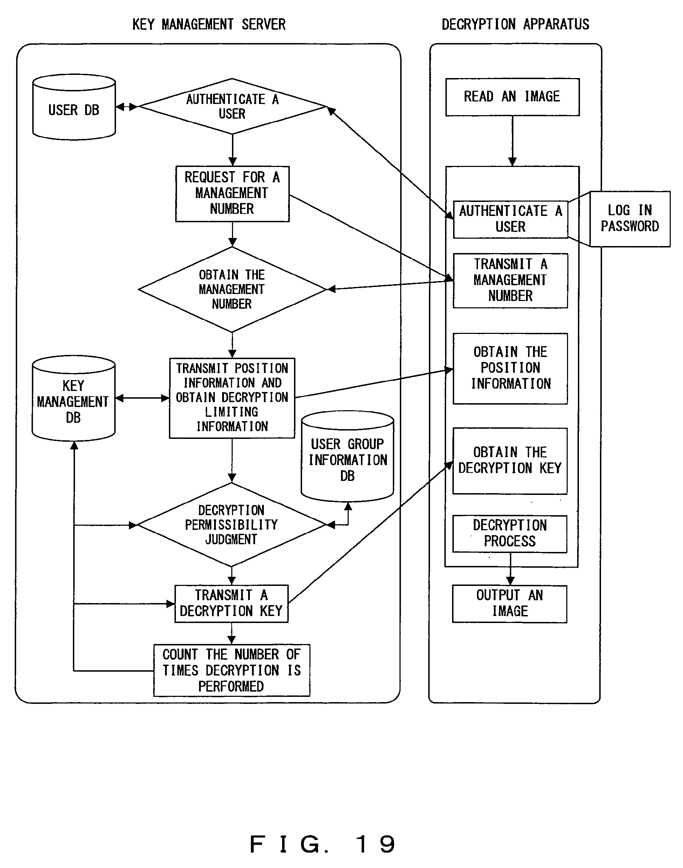

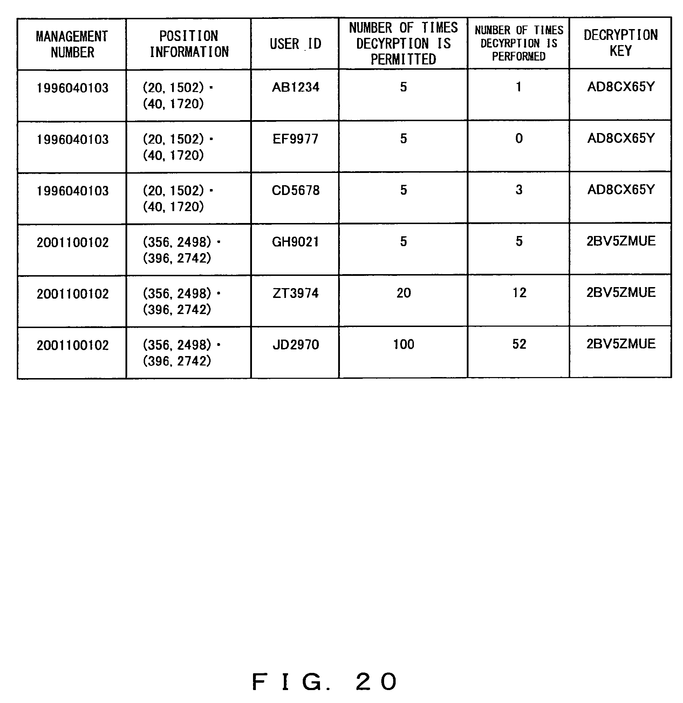

Fig. 18 is a key management database when utilizing the number of decryptions as decryption limiting information. The encryption system sets the number of times decryption will be permitted as decryption limiting information. The control is such that the decryption system manages the number of decryptions at the key management server, as shown in Fig. 19, and, in the case of decrypting a certain encryption image assigned a management number, a transmission of the decryption key is permitted if the number of times the image has been decrypted so far is no more than the number of times set for the number of times decryption will be permitted of the key management database, while a transmission of the decryption key is not permitted if the number of times decryption has been performed so far is larger than the number of set times. The server adds the number of times decryption has been performed to the key management database as the number of times decryption has been performed after transmitting the decryption key. Alternatively, the number of times decryption has been performed may be limited and managed by the user as shown in Fig. 20.

## Claims

1. An image encryption/decryption system for encrypting an electronic document image, comprising:
a user authentication unit for authenticating a user encrypting the image;
an encryption zone obtainment unit for obtaining position information of a partial zone of an image to be encrypted that is specified by a user;
a management number vesting unit for vesting with a management number for identifying the image;
an encryption key generation unit for generating an encryption key for encrypting an image;
a decryption key generation unit for generating a decryption key corresponding to the encryption key;
a decryption key storage unit for storing the management number, the position information of the partial zone, and the decryption key by correlating them with each other; and
an encryption key transmission unit for transmitting the encryption key and management number to a user.

2. The image encryption/decryption system according to claim 1, further comprising:
a decryption limiting information obtainment unit for obtaining decryption limiting information for limiting decryption, wherein
said decryption key storage unit stores the decryption limiting information by correlating it with said management number, position information and decryption key.

3. The image encryption/decryption system according to claim 2, wherein
said decryption limiting information obtained at said decryption limiting information obtainment unit is the authorization to perform decryption permitting only users and groups that have a specific authority to perform decryption.

4. The image encryption/decryption system according to claim 2, wherein
said decryption limiting information obtained at said decryption limiting information obtainment unit is a decryption permission period for permitting decryption only for a specific period of time.

5. The image encryption/decryption system according to claim 2, wherein
said decryption limiting information obtained at said decryption limiting information obtainment unit includes the number of times decryption is permitted and the number of times decryptions is performed, of which the numbers are for limiting the number of times decryption can be performed.

6. The image encryption/decryption system according to claim 1, wherein
said decryption key is a duplicate of an encryption key.

7. The image encryption/decryption system according to claim 1, wherein
said management number is added to an image in a machine readable form such as a barcode, two-dimensional barcode, electronic watermark, steganography or the like.

8. The image encryption/decryption system according to claim 1, further comprising
a management number obtainment unit for obtaining, from a user, a management number for an image to be decrypted,
a position information obtainment unit for obtaining said position information of said partial zone by using the management number as a key,
a decryption key obtainment unit for obtaining a decryption key for the partial zone by using the management number as a key, and
a decryption key transmission unit for transmitting the decryption key to the user.

9. The image encryption/decryption system according to claim 2, further comprising:
a management number obtainment unit for obtaining a management number of an image to be decrypted from a user,
a position information obtainment unit for obtaining said position information of said partial zone by using the management number as a key,
a decryption limiting information obtainment unit for obtaining said decryption limiting information by using the management number as a key,
a decryption permissibility judgment unit for judging a permissibility of decryption concerning a user by using the decryption limiting information, and
a decryption key obtainment and transmission unit for obtaining a decryption key to the partial zone by using the management number as a key and transmitting the decryption key to the user who is permitted to perform decryption.

10. The image encryption/decryption system according to claim 9, wherein
said decryption limiting information obtained at said decryption limiting information obtainment unit is the authorization to perform decryption permitting only users and groups that have a specific authority to perform decryption.

11. The image encryption/decryption system according to claim 9, wherein
said decryption limiting information obtained at said decryption limiting information obtainment unit is a decryption permission period for permitting decryption only for a specific period of time.

12. The image encryption/decryption system according to claim 9, wherein
said decryption limiting information obtained at said decryption limiting information obtainment unit includes the number of times decryption is permitted and the number of times decryption is performed, of which the numbers are for limiting the number of times decryption can be performed.

13. The image encryption/decryption system according to claims 1 through 12, wherein
said encryption zone obtainment unit specifies an encryption zone by pre-set format information.

14. A control method for use in an image encryption/decryption system for encrypting an electronic document image, comprising:
authenticating a user for encrypting the image;
obtaining position information of a partial zone of an image to be encrypted that is specified by a user;
vesting a management number for identifying the image;
generating an encryption key for encrypting the image;
generating a decryption key corresponding to the encryption key;
storing the management number, the position information of the partial zone, and the decryption key by correlating them with each other; and
transmitting the encryption key and management number to the user.

15. The control method according to claim 14,
obtaining decryption limiting information for limiting decryption, and
storing the decryption limiting information by correlating it with said management number, position information and decryption key.

16. The control method according to claim 14,
obtaining a management number for an image to be decrypted from a user,
obtaining said position information of said partial zone by using the management number as a key,
obtaining the decryption key of the partial zone by using the management number as a key, and
transmitting the decryption key to the user.

17. The control method according to claim 15,
obtaining a management number for an image to be decrypted from a user,
obtaining said position information of said partial zone by using the management number as a key,
obtaining said decryption limiting information by using the management number as a key;
judging a permissibility of decryption by the user by using the decryption limiting information; and
obtaining, and transmitting to a user who is permitted to decrypt, the decryption key to the partial zone by using the management number.
